# EUROPEAN PATENT SPECIFICATION

(11) **EP 3 964 428 B1**
(45) Date of publication and mention of the grant of the patent: **09.08.2023**
(21) Application number: 21193166.2
(22) Date of filing: 26.08.2021
(51) Int. Cl.: B62D 25/16, B62D 25/18

(54) **MUDGUARD GROUP, IN PARTICULAR FOR AGRICULTURAL AND/OR INDUSTRIAL VEHICLES, AND RELATED AGRICULTURAL AND/OR INDUSTRIAL VEHICLE**
SCHUTZBLECH, INSBESONDERE FÜR LANDWIRTSCHAFTLICHE UND/ODER INDUSTRIELLE FAHRZEUGE SOWIE EIN ENTSPRECHENDES LANDWIRTSCHAFTLICHES UND/ODER INDUSTRIELLES FAHRZEUG
GROUPE DE GARDE-BOUE, EN PARTICULIER POUR VÉHICULES AGRICOLES ET/OU INDUSTRIELS ET VÉHICULE AGRICOLE ET/OU INDUSTRIEL ASSOCIÉ

(30) Priority: 08.09.2020 IT 202000021226
(43) Date of publication of application: 09.03.2022
(73) Proprietor: DOMAR S.p.A., 70022 Altamura, Bari (IT)
(72) Inventor: LORUSSO, Debora, I-70022 Altamura, BARI (IT)
(74) Representative: Mitola, Marco

(56) References cited:
- WO-A1-2019/008885
- US-A1- 2007 273 122

## Description

### FIELD OF APPLICATION

This invention relates to a mudguard group, in particular for agricultural and/or industrial vehicles and the related agricultural and/or industrial vehicle.

### STATE OF THE ART

In the industrial vehicle industry, typically for agricultural use, the use of mudguards supported by movable supports is known. In effect, when the wheels are steered, the mudguards, which are attached thereto, cannot rotate beyond a certain angle without hitting the body/chassis of said vehicle. For this reason, specific supports must be provided to allow a relative rotation between the wheel and the mudguard when the steering angle of the wheel exceeds a certain limit value. Obviously, these supports must also provide for the automatic realignment of the wheel with the mudguard as soon as the wheel returns to a steering angle lower than said limit value.

For this purpose, supports are known in the art that provide for the insertion of springs between two elements rotatably connected to each other: the first element is integral with the wheel and the second element is integral with the mudguard.

The springs allow for mutual rotation when the element connected to the mudguard reaches the limit value and bumps against a special end stop, and the subsequent elastic return when the rotation angle of the steering is reduced below the limit value.

Such known solutions are not without their drawbacks and limitations.

In effect, the supports work outdoors in particularly dirty environments, typically in fields.

This means that they are constantly subjected to water, dust and mud: over time this dirt compromises the functionality of the mechanism which tends to jam.

In order to avoid such drawbacks, it is known to use oversized springs, which ensure a considerable elastic return force, and also a rototranslation mechanism that raises the mudguard during rotation. These mechanisms involve coupling surfaces with inclined planes in order to ensure rototranslation or special cams with various profiles.

However, said inclined planes or cam mechanisms require particularly high elastic return forces and, over time, still tend to jam.

Moreover, these known mechanisms have significant height or vertical bulk, i.e., along the axis of rotation of the mudguard. Solutions according ot cited prior art are disclosed by WO 2019/008885 A1, which discloses a mudguard group according to the preamble of claim 1, and US 2007/273122 A1.

### DISCLOSURE OF THE INVENTION

Thus, there is a need to resolve the cited drawbacks and limitations in reference to the prior art.

In other words, there is a need to provide a mudguard which may rotate with respect to the wheel when a limit steering angle is exceeded and which at the same time is reliable over time without requiring excessive oversizing of the return springs, and which offers reduced vertical dimensions.

This requirement is satisfied by a mudguard group according to claim 1 and a vehicle according to claim 15.

### DESCRIPTION OF THE DRAWINGS

Further features and advantages of this invention will become more apparent from the following detailed description of preferred, non-limiting embodiments thereof, wherein:

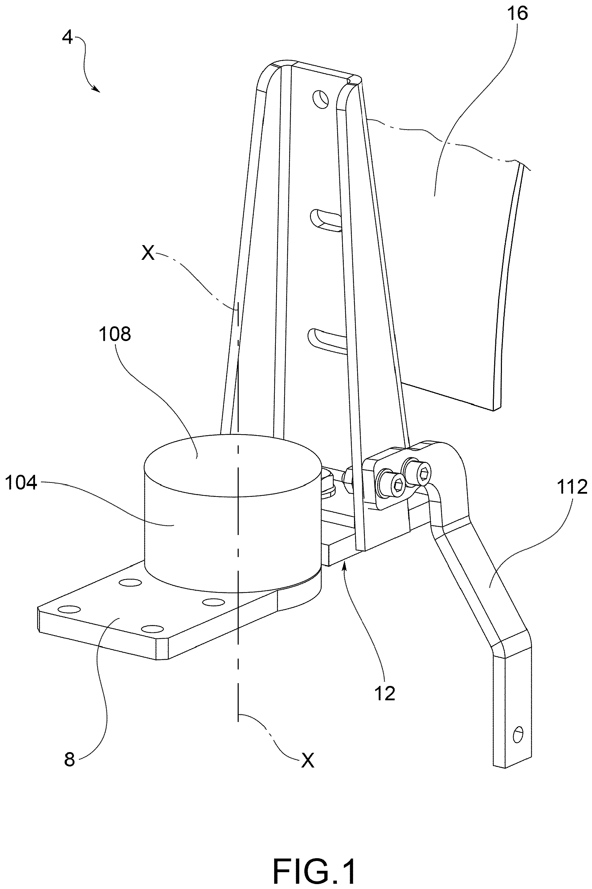

Fig. 1 is a perspective view, in an assembled configuration, of a mudguard group according to an embodiment of this invention;

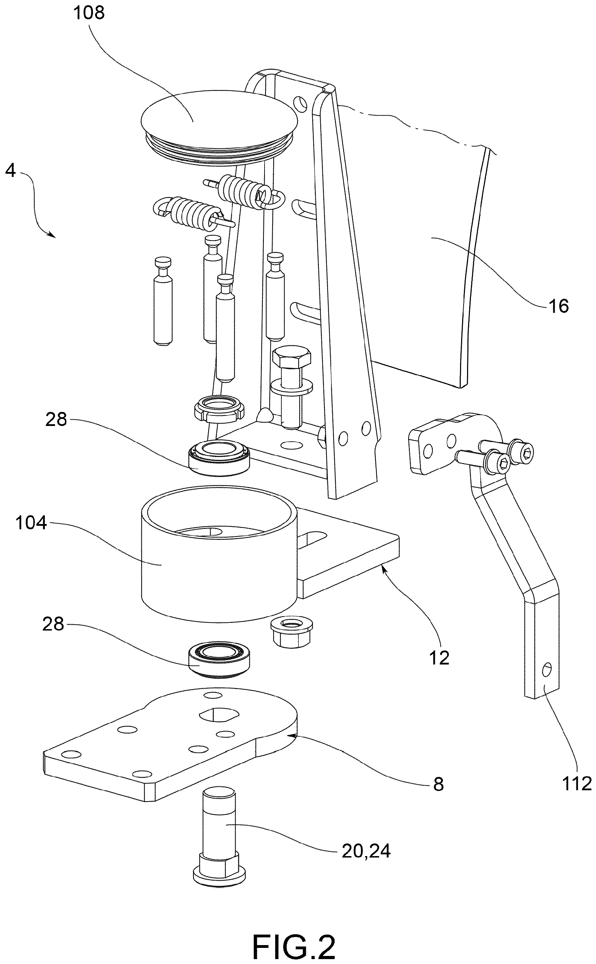

Fig. 2 is a perspective view, in exploded configuration, of the mudguard group of Fig. 1;

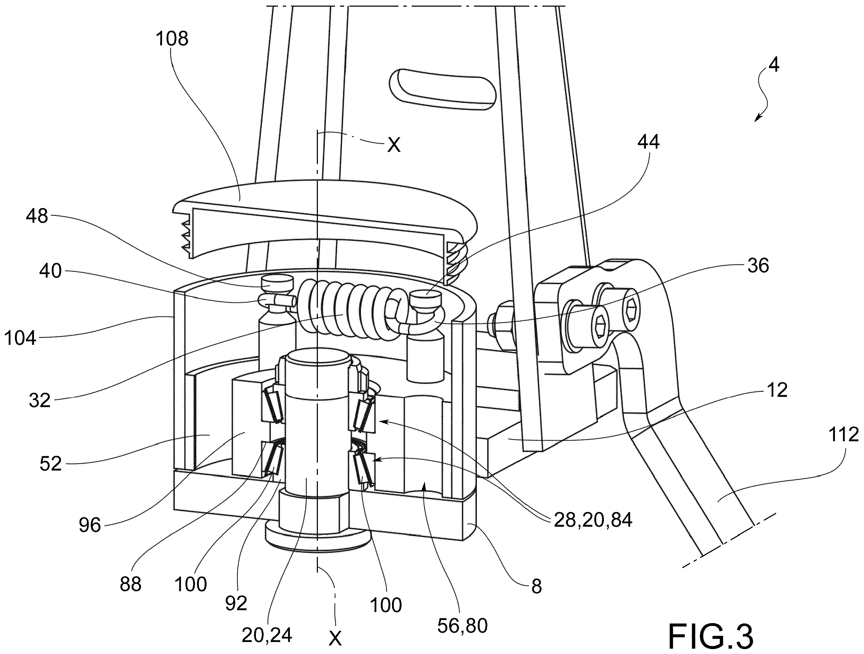

Fig. 3 is a perspective view, partially exploded, of the mudguard group in Fig. 1;
Fig. 4-5 are perspective views, assembled, of the mudguard group in Fig. 1, in the resting and steering configuration, respectively;
Fig. 6a-6b are plane views from the top of Fig. 4-5, respectively.

Elements or parts of elements common to the embodiments described hereinafter will be indicated with the same numerical references.

### DETAILED DESCRIPTION

With reference to the aforesaid figures, a mudguard group in particular for industrial and/or agricultural vehicles is globally indicated with 4.

The mudguard group 4 comprises a fixing plate 8 operatively connected to a steering wheel (not shown), so as to steer with said steering wheel, and a support plate 12 mechanically connected to an associable mudguard 16.

Rotational coupling means 20 positioned between the fixing plate 8 and the support plate 12 are also provided so as to allow a relative rotation about a rotation axis X-X.

Rotational coupling means 20 comprise a pin 24 integral with the fixing plate 8 and parallel to said axis of rotation X-X, at least one rolling bearing 28, coaxial with respect to the pin 24, a first elastic return means 32 extending from a first end 36 to a second end 40.

At the first end 36, the first elastic return means 32 is joined to a first support peg 44 integral with the support plate 12, while at the second end 40, the first elastic return means 32 is associated with a first fixing peg 48 integral with the fixing plate 8.

Said first support peg 44 and first fixing peg 48 are arranged aligned along a first straight line R1 not passing through the pin 24; preferably, one out of either said first support peg 44 or first fixing peg 48 is housed inside a first circular slot 52 of said support plate 12 delimiting its angular stroke.

In this way, each first support peg 44 and fixing peg 48 performs both the support function of the first elastic return means 32 and the rotational end-stroke function of the support plate 12 with respect to the fixing plate 8.

According to an embodiment, the first circular slot 52 extends for an arc of less than 180 degrees between angular ends 56 that delimit respective end stops to the relative rotation between the fixing plate 8 and the support plate 12.

According to the invention, the rotational coupling means 20 comprise a second elastic return means 60 extending from a first end 64 to a second end 68.

At the first end 64, the second elastic return means 60 is associated with a second support peg 72, integral with the support plate 12, and at the second end 68 is joined to a second fixing peg 76, integral with the fixing plate 8.

The second support peg 72 and the second fixing peg 76 are arranged aligned along a second straight line R2 not passing through the pin 24.

Preferably, said first line R1 and second line R2 are parallel and arranged on opposite sides with respect to the pin 24.

Preferably, one out of said second support peg 72 and second fixing peg 76 is housed within a second circular slot 80 that delimits its angular stroke. In this way, each second support peg 72 and fixing peg 76 performs both the support function of the second elastic return means 60 and the rotational end-stroke function of the support plate 12 with respect to the fixing plate 8.

Preferably, the second circular slot 80 extends for an arc of less than 180 degrees between angular ends 56 delimiting respective end stops to the relative rotation between the fixing plate 8 and the support plate 12.

Preferably, said first circular slot 52 and second circular slot 80 are specular and symmetrical with respect to the pin 24.

According to an embodiment, said first and/or second elastic return means 32,60 are coil springs.

According to a preferred embodiment, the rotational coupling means 20 comprise a pair of rolling bearings 84 superposed on each other parallel to the axis of rotation X-X and keyed onto the pin 24.

Preferably, said rolling bearings 84 are axially separated from each other by a shoulder or spacer ring 88, perpendicular to the axis of rotation X-X.

The rolling bearings 84 comprise an inner ring 92 integral with the pin 24, an outer ring 96 integral with the support plate 12 and abutted against said shoulder or spacer ring 88. Moreover, the rolling bearings 84 comprise rolling elements 100 arranged on tracks made between the inner ring 92 and the outer ring 96.

For example, said rolling bearings 84 are ball bearings, wherein said rolling elements 100 are spherical.

According to a further embodiment, said rolling bearings 84 are tapered roller bearings arranged symmetrically with respect to a plane of symmetry perpendicular to the axis of rotation X-X.

Preferably, the rotational coupling means 20 are contained within a containment cup 104, provided with a corresponding front cap 108. Due to said containment cup 104, the rotational coupling means are protected from the ingress of dust, water, mud, dirt, stones and the like.

According to an embodiment, the support plate 12 is associated with a bumper 112 shaped to intercept a portion of a vehicle upon reaching a given steering angle of the steering wheel. Said bumper 112 is, for example, an arm bolted to the support plate 12 so as to rotate integrally therewith. When said bumper 112 encounters an obstacle, it stops the rotation of the support plate 12 and the associated mudguard 16, while the wheel may continue to steer due to the rotational coupling means 20.

The operation of the mudguard group according to this invention will now be described.

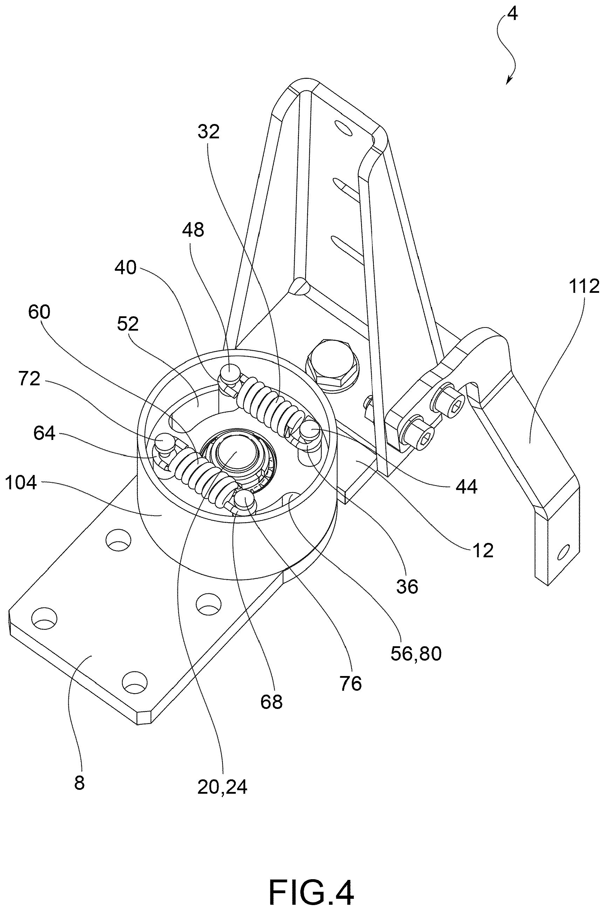

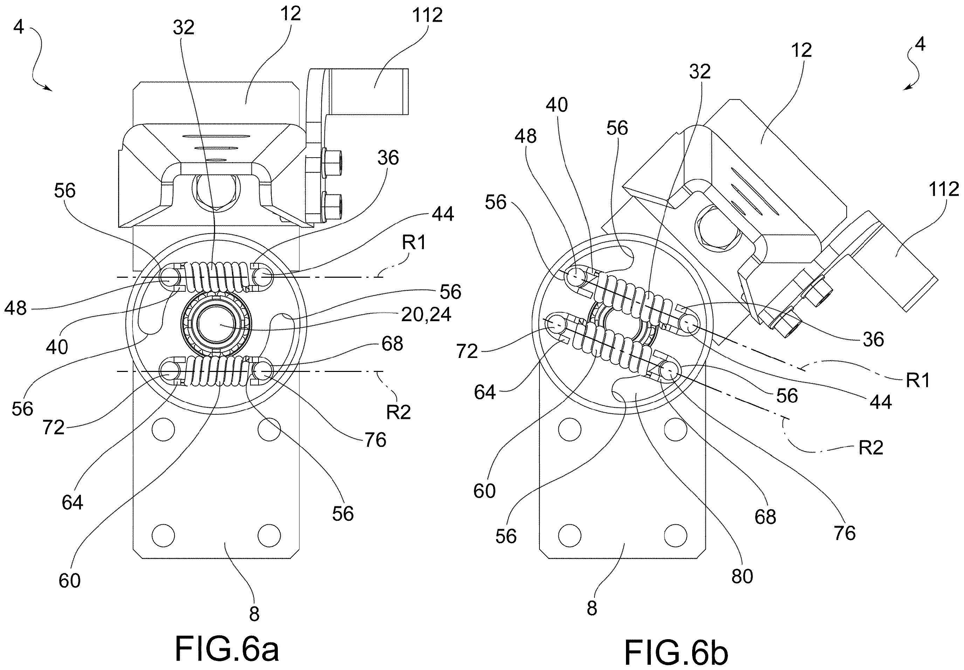

In particular, in the at-rest condition, i.e., in the absence of steering (Fig. 4-6a), the fixing plate 8 and the support plate 12 are aligned with each other due to the return action of the elastic return means 32,60.

When steering is performed and the limiting angle value is reached, the bumper 112 comes to rest against a portion of the vehicle body or chassis, so as to prevent the mudguard 16 from coming into contact with, i.e., striking the body or chassis of said vehicle.

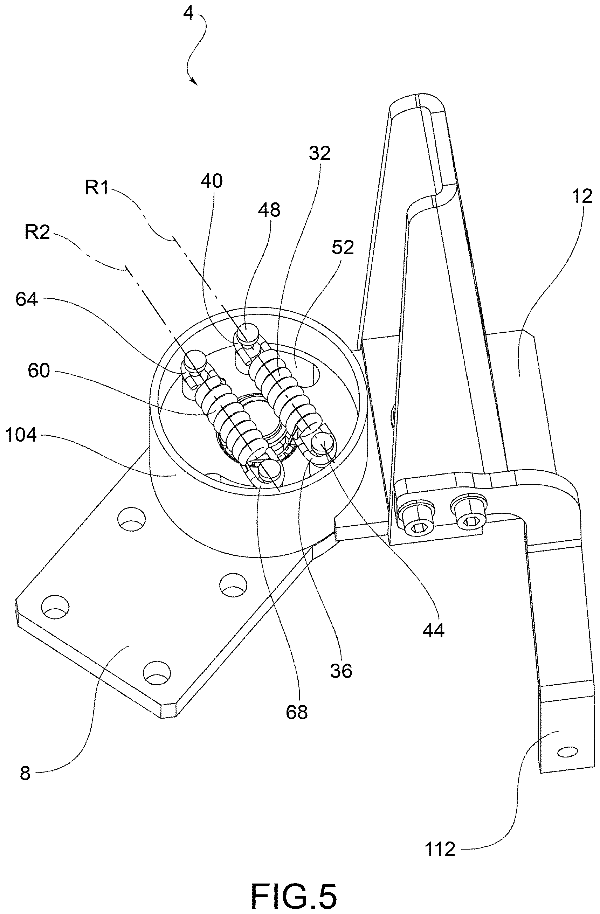

From this moment on, if the steering angle of the wheel is accentuated or increased, the fixing plate 8, integral with the steering wheel, will be angularly misaligned, along the axis of rotation X-X, with respect to the support plate 12, which remains fixed in the position of contact between the bumper 112 and the body or chassis portion (Fig. 5-6b).

Said relative rotational motion occurs through rotational coupling means 20.

When the steering is reduced below the limit value, contact is lost between the bumper 112 and the body/chassis: the elastic return means 32,60 ensure angular alignment between the support plate 12 and the fixing plate 8 whereby said plates remain in mutual alignment.

As may be appreciated from that which is described above, the mudguard group according to this invention overcomes the drawbacks of the prior art.

In particular, the mudguard group according to the invention is housed within a casing or cup that protects it from the ingress of dirt, water, dust, mud, stones and the like that could lead to jamming of the rotation mechanism.

The mudguard is equipped with a pure rotation mechanism: there are therefore no inclined surfaces or cams to guide the rotation of the mudguard; in this way, the torque required for the rotation and return to position of the mudguard is significantly reduced with respect to the solutions of the prior art that use cams and the like.

This also limits the overall vertical dimensions of the support of the mudguard.

Moreover, better smoothness of the rotation mechanism is ensured by using at least one rolling bearing between the mutually rotating parts, instead of known solutions employing mutually sliding/scraping surfaces.

In addition, this invention has internal end stops to the mechanism, provided at the abutment between the pegs and the ends of the circular slots: these end stops are housed inside the rotation mechanism (as well as inside the containment cup), unlike in the known solutions in which they are external, increasing the overall dimensions and risks of possible impacts and/or damage of the same.

The solution has reduced bulk and cost compared to solutions of the prior art.

The elastic return means, due to their position and configuration, always ensure a correct elastic return between the support plate and the fixing plate: the use of two specular means with respect to the pin ensures a reliable and symmetrical behavior with respect to the two directions of rotation of the wheel during steering.

A person skilled in the art, for the purpose of satisfying contingent and specific needs, may make numerous modifications and variations to the above-described solutions, as long as they are contained within the scope of the invention as defined by the following claims.

## Claims

1. Mudguard group (4) for vehicles, comprising:
- a fixing plate (8), operatively connected to a steering wheel, so as to steer with the latter,
- a support plate (12) mechanically connected to an associable mudguard (16),
- rotational coupling means (20) positioned between the fixing plate (8) and the support plate (12), so as to allow a relative rotation around a rotation axis (X-X),
- wherein said rotational coupling means (20) comprise a pin (24) integral with the fixing plate (8) and parallel to said axis of rotation (X-X), at least one rolling bearing (84), coaxial with respect to the pin (24), a first elastic return means (32) extending from a first end (36) to a second end (40), wherein at the first end (36) it is joined to a first support peg (44) integral with the support plate (12), and at the second end (40) it is associated with a first fixing peg (48) integral with the fixing plate (8),
- wherein said first support peg (44) and first fixing peg (48) are arranged aligned along a first straight line (R1) not passing through the pin (24) and wherein one out of said first support peg (44) and first fixing peg (48) is housed inside a first circular slot (52) of the support plate (12) that delimits its angular stroke, **characterised in that**
the rotational coupling means (20) comprise a second elastic return means (60) extending from a first end (64) to a second end (68), wherein at the first end (64) it is joined to a second support peg (72) integral with the support plate (12), and at the second end (68) it is joined to a second fixing peg (76) integral with the fixing plate (8).

2. The mudguard group (4) according to claim 1, wherein said first circular slot (52) extends for an arc of less than 180 degrees between angular ends (56) that delimit respective end stops to the relative rotation between the fixing plate (8) and the support plate (12).

3. The mudguard group (4) according to claim 1 or 2, wherein said second support peg (72) and second fixing peg (76) are arranged aligned along a second straight line (R2) not passing through the pin (24) and wherein one out of said second support peg (72) and second fixing peg (76) is housed inside a second circular slot of the support plate (80) that delimits its angular stroke.

4. The mudguard group (4) according to claim 3, wherein said first straight line (R1) and second straight line (R2) are parallel and arranged on opposite sides of the pin (24).

5. The mudguard group (4) according to any of the claims from 3 to 4, wherein said second circular slot (80) extends for an arc of less than 180 degrees between angular ends (56) that delimit respective end stops to the relative rotation between the fixing plate (8) and the support plate (12).

6. The mudguard group (4) according to any of the claims from 3 to 5, wherein said first circular slot (52) and second circular slot (80) are specular and symmetrical with respect to the pin (24).

7. The mudguard group (4) according to any of the claims from 1 to 6, wherein said first and / or second elastic return means (32,60) are coil springs.

8. The mudguard group (4) according to any of the claims from 1 to 7, wherein the rotational coupling means (20) comprise a pair of rolling bearings (84) superposed on each other parallel to the axis of rotation (X-X) and keyed onto the pin (24).

9. The mudguard group (4) according to claim 8, wherein said rolling bearings (84) are separated axially from each other by a shoulder or spacer ring (88), perpendicular to the axis of rotation (X-X).

10. The mudguard group (4) according to any of the claims from 8 to 9, wherein said rolling bearings (84) comprise an inner ring (92) integral with the pin (24), an outer ring (96) integral with the support plate (12) and abutted against said shoulder or spacer ring (88), and rolling elements (100) arranged on tracks made between the inner ring (92) and the outer ring (96).

11. The mudguard group (4) according to any of the claims from 8 to 10, wherein said rolling bearings (84) are ball bearings.

12. The mudguard group (4) according to any of the claims from 8 to 10, wherein said rolling bearings (84) are tapered roller bearings arranged symmetrically with respect to a plane of symmetry perpendicular to the axis of rotation (X-X).

13. The mudguard group (4) according to any of the claims from 1 to 12, wherein the rotational coupling means (20) are contained inside a containment cup (104).

14. The mudguard group (4) according to any of the claims from 1 to 13, wherein the support plate (12) is associated with a bumper shaped to intercept a portion of a vehicle upon reaching a given steering angle of the steering wheel.

15. Industrial and/or agricultural vehicle comprising a mudguard group (4) according to any of the claims from 1 to 14.

## Patentansprüche

1. Kotflügel- bzw. Spritzschutzgruppe (4) für Fahrzeuge, umfassend:
- eine Befestigungsplatte (8), die mit einem Lenkrad operativ verbunden ist, um mit letzterem zu lenken,
- eine Stütz- bzw. Trägerplatte (12), die mechanisch mit einem zuordenbaren bzw. verbindbaren Kotflügel bzw. Spritzschutz (16) verbunden ist,
- Drehkopplungsmittel (20), die zwischen der Befestigungsplatte (8) und der Trägerplatte (12) positioniert sind, um eine relative Drehung um eine Drehachse (X-X) zu ermöglichen,
- wobei die Drehkopplungsmittel (20) einen Stift (24), der integral mit der Befestigungsplatte (8) und parallel zu der Drehachse (X-X) ist, und zumindest ein Wälzlager (84) koaxial zu dem Stift (24) umfassen, wobei sich ein erstes elastisches Rückstellmittel (32) von einem ersten Ende (36) zu einem zweiten Ende (40) erstreckt, wobei es an dem ersten Ende (36) mit einem ersten Stütz- bzw. Trägerzapfen (44) verbunden ist, der integral mit der Trägerplatte (12) ist, und an dem zweiten Ende (40) mit einem ersten Befestigungszapfen (48) verbunden ist, der integral mit der Befestigungsplatte (8) ist,
- wobei der erste Trägerzapfen (44) und der erste Befestigungszapfen (48) ausgerichtet entlang einer ersten geraden Linie (R1) angeordnet sind, die nicht durch den Stift (24) verläuft, und wobei einer des ersten Trägerzapfens (44) und des ersten Befestigungszapfens (48) in einem ersten kreisförmigen Schlitz (52) der Trägerplatte (12) untergebracht ist, der bzw. die seinen Winkelhub begrenzt,
**dadurch gekennzeichnet, dass**
die Drehkopplungsmittel (20) ein zweites elastisches Rückstellmittel (60) umfassen, das sich von einem ersten Ende (64) zu einem zweiten Ende (68) erstreckt, wobei es an dem ersten Ende (64) mit einem zweiten Stütz- bzw. Trägerzapfen (72) verbunden ist, der integral mit der Trägerplatte (12) ist, und an dem zweiten Ende (68) mit einem zweiten Befestigungszapfen (76) verbunden ist, der integral mit der Befestigungsplatte (8) ist.

2. Kotflügelgruppe (4) nach Anspruch 1, wobei sich der erste kreisförmige Schlitz (52) über einen Bogen von weniger als 180 Grad zwischen Winkelenden (56) erstreckt, die jeweilige Endanschläge für die relative Drehung zwischen der Befestigungsplatte (8) und der Trägerplatte (12) begrenzen.

3. Kotflügelgruppe (4) nach Anspruch 1 oder 2, wobei der zweite Trägerzapfen (72) und der zweite Befestigungszapfen (76) entlang einer zweiten geraden Linie (R2) ausgerichtet angeordnet sind, die nicht durch den Stift (24) verläuft, und wobei einer des zweiten Trägerzapfens (72) und des zweiten Befestigungszapfens (76) in einem zweiten kreisförmigen Schlitz der Trägerplatte (80) untergebracht ist, der bzw. die seinen Winkelhub begrenzt.

4. Kotflügelgruppe (4) nach Anspruch 3, wobei die erste gerade Linie (R1) und die zweite gerade Linie (R2) parallel sind und auf gegenüberliegenden bzw. entgegengesetzten Seiten des Stifts (24) angeordnet sind.

5. Kotflügelgruppe (4) nach einem der Ansprüche 3 bis 4, wobei sich der zweite kreisförmige Schlitz (80) über einen Bogen von weniger als 180 Grad zwischen Winkelenden (56) erstreckt, die jeweilige Endanschläge für die relative Drehung zwischen der Befestigungsplatte (8) und der Trägerplatte (12) begrenzen.

6. Kotflügelgruppe (4) nach einem der Ansprüche 3 bis 5, wobei der erste kreisförmige Schlitz (52) und der zweite kreisförmige Schlitz (80) spiegelnd und symmetrisch in Bezug auf den Stift (24) sind.

7. Kotflügelgruppe (4) nach einem der Ansprüche 1 bis 6, wobei die ersten und/oder zweiten elastischen Rückstellmittel (32, 60) Schraubenfedern sind.

8. Kotflügelgruppe (4) nach einem der Ansprüche 1 bis 7, wobei die Drehkopplungsmittel (20) ein Paar Wälzlager (84) umfassen, die parallel zu der Drehachse (X-X) übereinander angeordnet sind und auf den Stift (24) aufgesteckt bzw. aufgezogen sind.

9. Kotflügelgruppe (4) nach Anspruch 8, wobei die Wälzlager (84) durch einen Schulter- oder Abstandsring (88) axial voneinander getrennt sind, und zwar senkrecht zu der Drehachse (X-X).

10. Kotflügelgruppe (4) nach einem der Ansprüche 8 bis 9, wobei die Wälzlager (84) einen Innenring (92) integral mit dem Stift (24), einen Außenring (96) integral mit der Trägerplatte (12) und anliegend an dem Schulter- oder Abstandsring (88), und Wälzelemente (100) umfassen, die auf Schienen zwischen dem Innenring (92) und dem Außenring (96) angeordnet sind.

11. Kotflügelgruppe (4) nach einem der Ansprüche 8 bis 10, wobei die Wälzlager (84) Kugellager sind.

12. Kotflügelgruppe (4) nach einem der Ansprüche 8 bis 10, wobei die Wälzlager (84) Kegelrollenlager sind, die symmetrisch in Bezug auf eine Symmetrieebene senkrecht zu der Drehachse (X-X) angeordnet sind.

13. Kotflügelgruppe (4) nach einem der Ansprüche 1 bis 12, wobei die Drehkopplungsmittel (20) in einem Aufnahmebecher (104) enthalten sind.

14. Kotflügelgruppe (4) nach einem der Ansprüche 1 bis 13, wobei die Trägerplatte (12) einem Stoßfänger zugeordnet ist bzw. mit diesem verbunden ist, der so geformt ist, dass er einen Abschnitt eines Fahrzeugs bei Erreichen eines gegebenen Lenkwinkels des Lenkrads abfängt.

15. Industrie- und/oder Landwirtschaftsfahrzeug umfassend eine Kotflügelgruppe (4) nach einem der Ansprüche 1 bis 14.

## Revendications

1. Groupe de garde-boue (4) pour véhicules, comprenant :
- une plaque de fixation (8), fonctionnellement reliée à un volant de direction, de manière à diriger avec ce dernier,
- une plaque de support (12) mécaniquement reliée à un garde-boue associé (16),
- des moyens d'accouplement rotatifs (20) positionnés entre la plaque de fixation (8) et la plaque de support (12), de manière à permettre une rotation relative autour d'un axe de rotation (X-X),
- dans lequel lesdits moyens d'accouplement rotatifs (20) comprennent une broche (24) d'un seul tenant avec la plaque de fixation (8) et parallèle audit axe de rotation (X-X), au moins un palier à roulement (84), coaxial par rapport à la broche (24), un premier moyen de retour élastique (32) s'étendant d'une première extrémité (36) à une deuxième extrémité (40), dans lequel au niveau de la première extrémité (36) il est joint à une première cheville de support (44) d'un seul tenant avec la plaque de support (12), et au niveau de la deuxième extrémité (40) il est associé à une première cheville de fixation (48) d'un seul tenant avec la plaque de fixation (8) ,
- dans lequel lesdites première cheville de support (44) et première cheville de fixation (48) sont agencées alignées le long d'une première ligne droite (R1) ne passant pas à travers la broche (24) et dans lequel une cheville parmi lesdites première cheville de support (44) et première cheville de fixation (48) est logée à l'intérieur d'une première fente circulaire (52) de la plaque de support (12) qui délimite sa course angulaire,
**caractérisé en ce que**
les moyens d'accouplement rotatifs (20) comprennent un deuxième moyen de retour élastique (60) s'étendant d'une première extrémité (64) à une deuxième extrémité (68), dans lequel au niveau de la première extrémité (64) il est joint à une deuxième cheville de support (72) d'un seul tenant avec la plaque de support (12), et au niveau de la deuxième extrémité (68) il est joint à une deuxième cheville de fixation (76) d'un seul tenant avec la plaque de fixation (8).

2. Groupe de garde-boue (4) selon la revendication 1, dans lequel ladite première fente circulaire (52) s'étend sur un arc de moins de 180 degrés entre des extrémités angulaires (56) qui délimitent des arrêts d'extrémité respectifs de la rotation relative entre la plaque de fixation (8) et la plaque de support (12).

3. Groupe de garde-boue (4) selon la revendication 1 ou 2, dans lequel lesdites deuxième cheville de support (72) et deuxième cheville de fixation (76) sont agencées alignées le long d'une deuxième ligne droite (R2) ne passant pas à travers la broche (24) et dans lequel une cheville parmi lesdites deuxième cheville de support (72) et deuxième cheville de fixation (76) est logée à l'intérieur d'une deuxième fente circulaire de plaque de support (80) qui délimite sa course angulaire.

4. Groupe de garde-boue (4) selon la revendication 3, dans lequel lesdites première ligne droite (R1) et deuxième ligne droite (R2) sont parallèles et agencées sur des côtés opposés de la broche (24).

5. Groupe de garde-boue (4) selon l'une quelconque des revendications 3 à 4, dans lequel ladite deuxième fente circulaire (80) s'étend sur un arc de moins de 180 degrés entre des extrémités angulaires (56) qui délimitent des arrêts d'extrémité respectifs de la rotation relative entre la plaque de fixation (8) et la plaque de support (12).

6. Groupe de garde-boue (4) selon l'une quelconque des revendications 3 à 5, dans lequel lesdites première fente circulaire (52) et deuxième fente circulaire (80) sont spéculaires et symétriques par rapport à la broche (24).

7. Groupe de garde-boue (4) selon l'une quelconque des revendications 1 à 6, dans lequel lesdits premier et/ou deuxième moyens de retour élastiques (32, 60) sont des ressorts hélicoïdaux.

8. Groupe de garde-boue (4) selon l'une quelconque des revendications 1 à 7, dans lequel les moyens d'accouplement rotatifs (20) comprennent une paire de paliers à roulement (84) superposés l'un sur l'autre parallèles à l'axe de rotation (X-X) et clavetés sur la broche (24).

9. Groupe de garde-boue (4) selon la revendication 8, dans lequel lesdits paliers à roulement (84) sont séparés axialement l'un de l'autre par un anneau d'épaulement ou d'espacement (88), perpendiculaire à l'axe de rotation (X-X).

10. Groupe de garde-boue (4) selon l'une quelconque des revendications 8 à 9, dans lequel lesdits paliers à roulement (84) comprennent un anneau interne (92) d'un seul tenant avec la broche (24), un anneau externe (96) d'un seul tenant avec la plaque de support (12) et en butée contre ledit anneau d'épaulement ou d'espacement (88), et des éléments roulants (100) agencés sur des pistes réalisées entre l'anneau interne (92) et l'anneau externe (96).

11. Groupe de garde-boue (4) selon l'une quelconque des revendications 8 à 10, dans lequel lesdits paliers à roulement (84) sont des roulements à billes.

12. Groupe de garde-boue (4) selon l'une quelconque des revendications 8 à 10, dans lequel lesdits paliers à roulement (84) sont des paliers à roulement inclinés agencés symétriquement par rapport à un plan de symétrie perpendiculaire à l'axe de rotation (X-X).

13. Groupe de garde-boue (4) selon l'une quelconque des revendications 1 à 12, dans lequel les moyens d'accouplement rotatifs (20) sont contenus à l'intérieur d'une coupelle de confinement (104).

14. Groupe de garde-boue (4) selon l'une quelconque des revendications 1 à 13, dans lequel la plaque de support (12) est associée à un pare-chocs formé pour intercepter une partie d'un véhicule lorsqu'un angle de direction donné du volant de direction est atteint.

15. Véhicule industriel et/ou agricole comprenant un groupe de garde-boue (4) selon l'une quelconque des revendications 1 à 14.
